# FASCICULE DE BREVET EUROPEEN

(11) **EP 1 020 800 B1**
(45) Date de publication et mention de la délivrance du brevet: **10.04.2002**
(21) Numéro de dépôt: 00460001.1
(22) Date de dépôt: 06.01.2000
(51) Int. Cl.: G06F 12/14

(54) **Microprocesseur avec circuits de protection pour sécuriser l'accès à ses registres**
Mikroprozessor mit Schutzschaltungen zur Sicherung des Zugangs zu seinen Registern
Microprocessor comprising protection circuits for securing access to its registers

(30) Priorité: 11.01.1999 FR 9900301
(43) Date de publication de la demande: 19.07.2000
(73) Titulaire: STMicroelectronics S.A., 92120 Montrouge (FR)
(72) Inventeur: Roche, Franck, 56100 Lorient (FR)
(74) Mandataire: Ballot, Paul

(56) Documents cités:
- EP-A- 0 651 394
- GB-A- 2 070 821
- US-A- 5 027 317
- US-A- 5 522 086

## Description

La présente invention concerne un microprocesseur muni de circuits de protection destinés à sécuriser l'accès aux registres dudit microprocesseur.

La sélection d'un registre dans un microprocesseur se déroule généralement de la manière suivante : l'unité de commande du microprocesseur génère l'adresse du registre à sélectionner et l'applique sur le bus d'adresses du microprocesseur; cette adresse est transmise à un décodeur d'adresses qui sélectionne alors le registre se rapportant à ladite adresse en activant l'entrée de sélection de ce registre; le registre peut ensuite être lu ou son contenu modifié. Ce registre est par exemple un registre d'adresses ou un registre d'instructions.

Il arrive parfois que le contenu des registres du microprocesseur soit modifié accidentellement lors d'une erreur ou d'une défaillance du système dans le microprocesseur, notamment lors de l'initialisation du microprocesseur.

US-A-5 522 086 (BURTON MITCHELL G ET AL) vise à résoudre un problème similaire à celui posé par la présente demande - empêcher l'accès accidentel à un ou des registres d'un microprocesseur - mais pour un ou des registres extérieurs au processeur, et décrit (voir en particulier I.5-15 de l'abrégé, col. 4, I. 44-47, col. 5, I. 1-5 et I. 20-21, col. 5, I. 41 à col.6, I. 18, col. 6, I. 19-22 ainsi que col. 8. 60-62 et col. 9, I. 7-35) un mécanisme de configuration d'appareils liés à un processeur par un bus, écrivant à une addresse donnée des circuits de configuration de l'appareil une donnée constituant une partie d'une séquence de sécurité d'accès, autorisant à partir de ce moment l'enregistrement d'informations de configuration à d'autres adresses dans les registres de configuration. Une séquence à plusieurs bytes, chacun écrit dans un registre différent du mécanisme, augmente la sécurité.

EP-A-0 651 394 (SGS THOMSON MICROELECTRONICS) décrit un circuit intégré comprenant une mémoire EEPROM comprenant une zone protégeable en écriture et une zone protégeable en écriture et en lecture par un verrou qui est mis en état verrouillé à la mise sous tension et libéré par une commande d'écriture, interprétée comme une présentation d'une donnée compatible avec un mot de passe donné.

Un but de l'invention est donc de proposer un microprocesseur garantissant un accès sécurisé à ses registres.

Selon l'invention, on prévoit d'empêcher après chaque initialisation du microprocesseur tout accès aux registres de celui-ci et de n'autoriser l'accès à un registre que si un mot de passe propre à ce registre a été présenté sur le bus de données du microprocesseur lors de la première opération de sélection de ce registre.

Aussi, l'invention a pour objet un microprocesseur comportant un bus d'adresses, un bus de données, une pluralité de registres accessibles en lecture et en écriture, et un décodeur d'adresses pour sélectionner lesdits registres en fonction de l'adresse présente sur ledit bus d'adresses,
caractérisé en ce qu'il comporte en outre une pluralité de circuits de protection associés chacun à un registre du microprocesseur pour sécuriser l'accès audit registre, lesdits circuits de protection bloquant automatiquement la sélection desdits registres après chaque initialisation du microprocesseur, et en ce que le déblocage d'un circuit de protection associé à un registre du microprocesseur est réalisé par l'envoi successif sur le bus de données de N mots de passe propres audit registre lors de N premières opérations de sélection dudit registre, avec N≥1, la sélection dudit registre n'étant effective que pour les opérations ultérieures de sélection dudit registre jusqu'à l'initialisation suivante du microprocesseur.

Suivant les besoins, le circuit de protection peut bloquer la sélection du registre associé lors des accès en lecture et en écriture à ce registre, ou uniquement lors des accès en écriture.

Chaque circuit de protection compare, lors des N premières opérations de sélection du registre associé, les N données présentes sur le bus de données avec les N mots de passe propres audit registre associé et se débloque pour les opérations ultérieures de sélection dudit registre jusqu'à l'initialisation suivante du microprocesseur si les N données correspondent aux N mots de passe.

Dans la forme de réalisation la plus simple, on ne prévoit qu'un mot de passe (N=1) par registre. Le circuit de protection comporte alors:
- un circuit comparateur pour comparer lors de la première opération de sélection du registre associé la donnée présente sur le bus de données au mot de passe propre audit registre, et délivrer un signal de sortie représentatif du résultat de la comparaison,
- des premiers moyens pour maintenir dans le circuit de protection ledit signal de sortie jusqu'à l'initialisation suivante du microprocesseur,
- des seconds moyens pour autoriser la sélection du registre pour les opérations ultérieures de sélection dudit registre si ledit signal de sortie indique que la donnée présente sur le bus de données du microprocesseur lors de la première opération de sélection du registre correspond au mot de passe associé audit registre.

D'autres caractéristiques et avantages de l'invention apparaîtront à la lecture de la description détaillée qui suit et qui est faite en référence aux dessins annexés, parmi lesquels:
- la figure 1 représente une première forme de réalisation d'un circuit de protection selon l'invention pour sécuriser l'accès en lecture et en écriture à un registre;
- la figure 2 représente une seconde forme de réalisation d'un circuit de protection selon l'invention pour sécuriser l'accès en écriture à un registre; et
- la figure 3 représente une forme de réalisation particulière regroupant deux circuits de protection sécurisant conjointement l'accès à deux registres; et
- la figure 4 représente une troisième forme de réalisation d'un circuit de protection selon l'invention pour sécuriser l'accès en lecture et en écriture à un registre.

Les registres dont il est question dans la suite de la description comportent une entrée de sélection, une entrée de lecture/écriture sur laquelle est appliqué un signal de lecture/écriture R/W, et une entrée/sortie de données connectée au bus de données du microprocesseur.

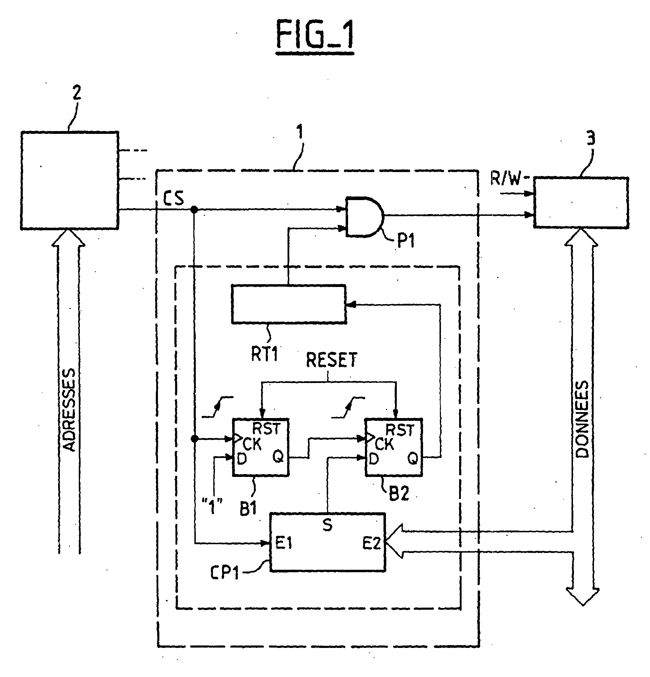

Pour mettre en oeuvre l'invention, un microprocesseur dont une partie est représentée à la figure 1, est muni d'un circuit de protection 1 pour sécuriser l'accès à un registre 3. Ce circuit de protection est intercalé entre la sortie d'un décodeur d'adresses 2 chargée de sélectionner le registre 3 et l'entrée de sélection du registre 3. Ladite sortie du décodeur délivre un signal de sélection CS. On prévoit selon l'invention un circuit de protection par registre.

Selon l'invention, le circuit de protection 1 est prévu pour bloquer automatiquement la transmission du signal de sélection CS après chaque initialisation (RESET dans la littérature anglo-saxonne) du microprocesseur. Le déblocage du circuit de protection 1 est ensuite réalisé par l'envoi d'un mot de passe propre au registre 3 sur le bus de données du microprocesseur lors de la première opération de sélection du registre 3. L'envoi d'un mot de passe sur le bus de données et l'opération de sélection du registre 3 sont par exemple mis en oeuvre lors d'un cycle d'écriture du mot de passe dans le registre 3.

La première opération de sélection sert uniquement à débloquer le circuit de protection 1, la sélection du registre 3 n'étant effective que pour les opérations ultérieures de sélection du registre 3, et ce jusqu'à l'initialisation suivante du microprocesseur.

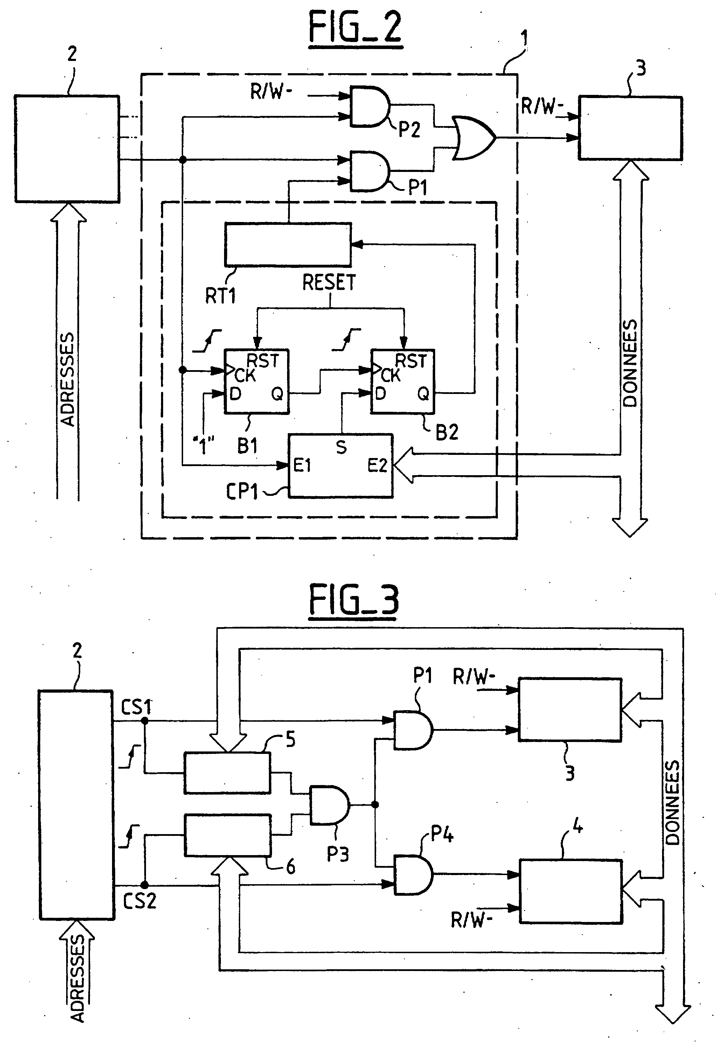

Dans la forme de réalisation présentée à la figure 1, le circuit de protection 1 bloque la sélection du registre 3 lors des accès en lecture et en écriture au registre 3 après chaque initialisation. Selon une variante illustrée à la figure 2, le circuit de protection bloque la sélection du registre 3 uniquement lors des accès en écriture au registre 3.

En référence à la figure 1, le circuit de protection comporte essentiellement un circuit comparateur CP1 pour comparer lors de la première opération de sélection du registre 3 la donnée présente sur le bus de données du microprocesseur au mot de passe propre au registre 3, et délivrer un signal de sortie représentatif du résultat de la comparaison, des moyens pour maintenir dans le circuit de protection ledit signal de sortie jusqu'à l'initialisation suivante du microprocesseur, et des moyens pour autoriser la sélection du registre pour les opérations ultérieures de sélection dudit registre si ledit signal de sortie indique que la donnée présente sur le bus de données du microprocesseur lors de la première opération de sélection du registre correspond au mot de passe associé au registre 3.

Le circuit comparateur CP1 comporte une entrée de sélection E1 connectée à la sortie du décodeur d'adresses chargée de sélectionner le registre 3, une entrée de données E2 pour recevoir la donnée présente sur le bus de données, et une sortie S délivrant une valeur représentative du résultat de la comparaison entre la donnée sur le bus de données et le mot de passe associé au registre 3. Il délivre sur sa sortie S un "1" logique si les deux données sont égales et un "0" logique sinon. La structure d'un tel circuit est bien connue de l'homme du métier. A noter que le mot de passe associé au registre 3 peut être soit mémorisé de façon permanente dans le circuit comparateur CP1, soit fourni par un périphérique extérieur (non montré).

Le résultat, "1" ou "0", de cette comparaison est maintenu dans le circuit de protection 1 jusqu'à l'initialisation suivante du microprocesseur par deux bascules de type D, B1 et B2, ayant chacune une entrée d'horloge CK, une entrée de signal D, une entrée d'initialisation RST et une sortie de signal Q.

L'entrée d'horloge CK et l'entrée de signal D de la bascule B1 reçoivent respectivement le signal de sélection CS et un "1" logique. L'entrée de signal D est par exemple connectée à une source d'alimentation du microprocesseur. La sortie de signal Q de cette même bascule est connectée à l'entrée d'horloge CK de la bascule B2. L'entrée de signal D de la bascule B2 est connectée à la sortie S du circuit comparateur CP1. Un signal d'initialisation RESET est appliqué sur les entrées RST des bascules B1 et B2 à chaque initialisation du microprocesseur.

Pendant la première opération de sélection du registre 3, la sélection du registre 3 n'est pas effective pour éviter que le mot de passe présent sur le bus de données pendant cette opération ne soit écrit dans le registre 3.

Aussi, pour que la sélection du registre 3 ne soit autorisée qu'à partir de la deuxième opération de sélection du registre 3, la sortie Q de la bascule B2 est connectée via un circuit de retard RT1 à une première entrée d'une porte logique P1 de type ET à deux entrées. La seconde entrée de la porte P1 est reliée à la sortie du décodeur d'adresses 2 chargée de sélectionner le registre 3 et la sortie de la porte P1 est connectée à l'entrée de sélection du registre 3. Le circuit de retard RT1 est de préférence un registre à décalage synchronisé sur le signal de sélection CS.

Le circuit de protection fonctionne de la manière suivante: à chaque initialisation (RESET) du microprocesseur, les bascules B1 et B2 sont remises à zéro. Lors de la première opération de sélection du registre 3, le circuit de protection 1 compare la donnée présente sur le bus de données du microprocesseur avec le mot de passe associé au registre 3. Lors de cette opération, la sortie Q de la bascule B1 passe à "1" et sur le front montant résultant du signal issu de cette sortie, la sortie Q de la bascule B2 délivre le résultat de la comparaison. Ce résultat est ensuite appliqué sur la première entrée de la porte P1 avec un retard pour éviter que la donnée présente sur le bus de données ne soit écrite dans le registre 3 pendant cette première opération.

Si le circuit de retard RT1 est un registre à décalage synchronisé sur le signal CS, le résultat de la comparaison n'est appliqué sur la première entrée de la porte P1 qu'à partir de la deuxième opération de sélection du registre 3.

Il est à noter par ailleurs que le mot de passe associé au registre 3 est de préférence une donnée non prévue habituellement dans le programme du microprocesseur pour éviter que le circuit de protection ne se débloque par hasard.

Dans la variante de réalisation présentée à la figure 2, le circuit de protection est destiné à sécuriser uniquement l'accès en écriture du registre 3. L'accès en lecture du registre 3 n'est jamais bloqué. Le déblocage du circuit de protection doit toutefois être effectué lors de la première opération de sélection du registre comme pour le circuit de protection de la figure 1.

En référence à la figure 2, le circuit de protection 1 est complété par une deuxième porte logique P2 de type ET à deux entrées et une porte logique OR de type OU à deux entrées. La porte P2 a une première entrée connectée à la sortie du décodeur 2 chargée de sélectionner le registre 3 et une deuxième entrée sur laquelle est appliqué le signal de lecture/écriture R/W-. Les sorties des portes P1 et P2 sont connectées chacune à une entrée de la porte OR et la sortie de la porte OR est reliée à l'entrée de sélection du registre 3.

Ainsi, le registre 3 peut être lu à tout moment même si le circuit de protection 1 est bloqué.

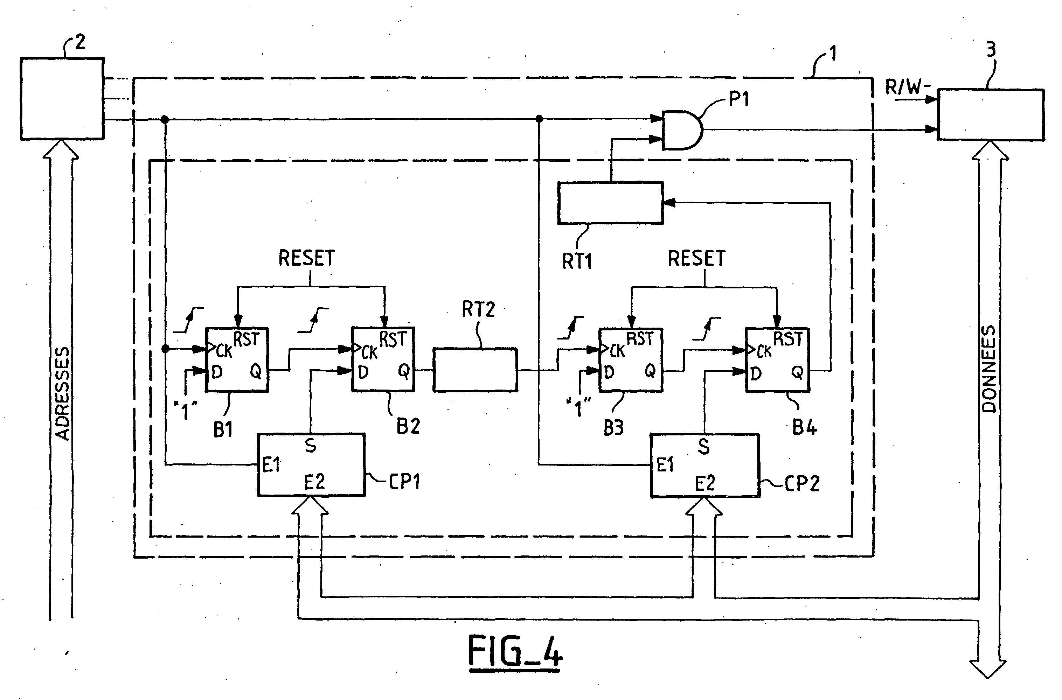

Dans le cas d'un microprocesseur 8 bits, la probabilité que la donnée présente sur le bus de données lors d'une première opération de sélection du registre 3 causée par une défaillance du système soit le mot de passe associé au registre 3, est de 1/256 (256=2⁸). Pour diminuer cette probabilité, on propose en variante de combiner les circuits de protection de plusieurs registres entre eux. Cette forme de réalisation est illustrée à la figure 3.

Dans l'exemple de la figure 3, les circuits de protection de deux registres sont combinés pour sécuriser leur accès. Dans cet exemple, le décodeur d'adresses est chargé de sélectionner des registres du microprocesseur, en particulier deux registres, 3 et 4. Les éléments B1, B2, CP1 et RT1 du circuit de protection 1 de la figure 1 sont regroupés dans un bloc 5. Une porte logique P3 de type ET à deux entrées est intercalée entre la sortie du bloc 5 (correspondant à la sortie du circuit de retard RT1) et la première entrée de la porte P1. La sortie du décodeur 2 chargée de sélectionner le registre 3 est connectée à l'entrée du bloc 5 et à la deuxième entrée de la porte P1.

Un bloc 6 identique au bloc 5 et une porte logique P4 de type ET constituent le circuit de protection du registre 4 tel que décrit à la figure 1. Bien entendu, le circuit comparateur du bloc 6 est chargé de comparer la donnée présente sur le bus de données avec un mot de passe associé au registre 4, distinct de celui associé au registre 3. La sortie du bloc 6 est connectée à une deuxième entrée de la porte P3. La sortie du décodeur 2 chargée de sélectionner le registre 4 est connectée à l'entrée du bloc 6 et à la deuxième entrée de la porte P4.

Pour avoir accès aux registres 3 et 4, l'opération de déblocage du circuit de protection de la figure 3 consiste à effectuer un accès en écriture sur chaque registre en appliquant le mot de passe correspondant sur le bus de données. Ces deux accès en écriture sont à effectuer lors de la première sélection du registre 3 et lors de la première sélection du registre 4, la sélection du registre 3 pouvant se faire avant ou après celle du registre 4.

Pour diminuer encore cette probabilité, une autre forme de réalisation du circuit de protection 1 est proposée à la figure 4. Pour ce faire, on prévoit de sécuriser l'accès au registre 3 par deux mots de passe, ces deux mots de passe devant être placés sur le bus de données dans un ordre donné. Pour la mise en oeuvre de ce circuit de protection, le circuit de protection de la figure 1 est complété par deux bascules de type D supplémentaires, B3 et B4, montées en cascade, un second circuit comparateur CP2 et un second circuit de retard RT2. L'entrée d'horloge CK de la bascule B3 est connectée à la sortie Q de la bascule B2 au moyen du second circuit de retard RT2. Un "1" logique est appliqué sur l'entrée D de la bascule B2 et sa sortie Q est connectée à l'entrée d'horloge CK de la bascule B4. L'entrée de données E2 du circuit comparateur CP2 est connectée au bus de données et son entrée de sélection E1 est connectée à la sortie du décodeur d'adresses chargée de sélectionner le registre 3. La sortie S du comparateur CP2 est connectée à l'entrée D de la bascule B4 et la sortie Q de la bascule B4 est connectée au circuit de retard RT1. Les deux circuits de retard sont synchronisés sur le signal de sélection CS.

Les comparateurs CP1 et CP2 sont chargés de comparer, respectivement lors des première et seconde opérations de sélection du registre 3, la donnée présente sur le bus de données avec le premier et le second mot de passe du registre 3.

Pour débloquer ce circuit de protection, il faut non seulement fournir sur le bus de données les deux mots de passe associés au registre 3 mais les fournir dans l'ordre. La sécurité des accès aux registres du microprocesseur s'en trouve par conséquent améliorée. Bien entendu, on peut augmenter encore la sécurité du système en augmentant le nombre de mots de passe associés à un même registre.

## Revendications

1. Microprocesseur comportant un bus d'adresses, un bus de données, une pluralité de registres (3) accessibles en lecture et en écriture, et un décodeur d'adresses (2) pour sélectionner lesdits registres en fonction de l'adresse présente sur ledit bus d'adresses,
**caractérisé en ce qu'**il comporte en outre une pluralité de circuits de protection (1) associés chacun à un registre (3) du microprocesseur pour sécuriser l'accès audit registre, lesdits circuits de protection bloquant automatiquement la sélection desdits registrés après chaque initialisation (RESET) du microprocesseur, et **en ce que** le déblocage d'un circuit de protection (1) associé à un registre du microprocesseur est réalisé par l'envoi successif sur l'ebus de données de N mots de passe propres audit registre lors de N premières opérations de sélection dudit registre, avec N≥1, la sélection dudit registre n'étant effective que pour les opérations ultérieures de sélection dudit registre jusqu'à l'initialisation suivante du microprocesseur.

2. Microprocesseur selon la revendication 1, **caractérisé en ce que** ledit circuit de protection (1) est agencé pour bloquer, après chaque initialisation (RESET) du microprocesseur, la sélection d'un registre (4) lors des accès en lecture et en écriture audit registre.

3. Microprocesseur selon la revendication 1, **caractérisé en ce que** ledit circuit de protection (1) est agencé pour bloquer, après chaque initialisation (RESET) du microprocesseur, la sélection d'un registre uniquement lors des accès en écriture audit registre.

4. Microprocesseur selon l'une des revendications 1 à 3, **caractérisé en ce que** chaque circuit de protection (1) est connecté entre une sortie du décodeur d'adresses (2) chargée de sélectionner le registre (3) associé audit circuit de protection et une entrée de sélection dudit registre (3) associé.

5. Microprocesseur selon l'une des revendications 1 à 4, **caractérisé en ce que** chaque circuit de protection (1) est agencé pour comparer, lors des N premières opérations de sélection du registre associé, les N données présentes sur le bus de données avec les N mots de passe propres audit registre et se débloque pour les opérations ultérieures de sélection dudit registre jusqu'à l'initialisation suivante du microprocesseur si les N données correspondent aux N mots de passe.

6. Microprocesseur selon la revendication 4, **caractérisé en ce que**, pour chaque registre, il est prévu un mot de passe (N=1), et chaque circuit de protection (1) comporte :
- un circuit comparateur (CP1) pour comparer lors de la première opération de sélection du registre (3) associé la donnée présente sur le bus de données au mot de passe propre audit registre, et délivrer un signal de sortie représentatif du résultat de la comparaison,
- des premiers moyens (B1,B2) pour maintenir dans le circuit de protection ledit signal de sortie jusqu'à l'initialisation suivante du microprocesseur,
- des seconds moyens (RT1,P1) pour autoriser la sélection du registre pour les opérations ultérieures de sélection dudit registre si ledit signal de sortie indique que la donnée présente sur le bus de données du microprocesseur lors de la première opération de sélection du registre correspond au mot de passe associé audit registre.

7. Microprocesseur selon la revendication 6, **caractérisé en ce que** les premiers moyens comportent des première et seconde bascules (B1,B2) de type D ayant chacune une entrée d'horloge (CK), une entrée de signal (D), une entrée d'initialisation (RST) sur laquelle est appliqué un signal d'initialisation du microprocesseur, et une sortie de signal (Q),
la première bascule (B1) ayant son entrée d'horloge (CK) connectée à la sortie du décodeur d'adresses chargée de sélectionner le registre (3) associé audit circuit de protection (1), et son entrée de signal (D) qui reçoit un signal qui correspond à un "1" logique,
et la seconde bascule (B2) ayant son entrée d'horloge (CK) connectée à la sortie de signal (Q) de la première bascule (B1), son entrée de signal (D) qui reçoit le signal de sortie du circuit comparateur (CP1), et sa sortie de signal (Q) qui délivre ainsi le signal de sortie du circuit comparateur jusqu'à l'initialisation suivante du microprocesseur.

8. Microprocesseur selon la revendication 7, **caractérisé en ce que** les seconds moyens comportent une porte logique (P1) de type ET à deux entrées dont la première entrée est connectée à la sortie du décodeur d'adresses chargée de sélectionner le registre (3) associé audit circuit de protection (1), la seconde entrée est connectée via un circuit de retard (RT1) à la sortie de signal (Q) de la deuxième bascule (B2) des premiers moyens, et la sortie est connectée à l'entrée de sélection du registre associé (3).

9. Microprocesseur selon la revendication 8, **caractérisé en ce que** ledit circuit de retard (RT1) est un registre à décalage synchronisé sur les opérations de sélection dudit registre (3).

## Claims

1. Microprocessor including an address bus, a data bus, a number of registers (3) which are accessible in read and in write mode, and an address decoder (2) for selecting the said registers on the basis of the address present on the said address bus, **characterised in that** it further includes a number of protection circuits (1) each associated with a register (3) of the microprocessor in order to security-protect access to the said register, the said protection circuits automatically blocking the selection of the said registers after each initialisation (RESET) of the microprocessor, and **in that** the unblocking of a protection circuit (1) associated with a register of the microprocessor is achieved by the successive sending on the data bus of N passwords specific to the said register during N first operations of selection of the said register, with N≥1, the selection of the said register being effective only for the subsequent operations of selection of the said register until the next initialisation of the microprocessor.

2. Microprocessor according to Claim 1, **characterised in that** the said protection circuit (1) is configured, after each initialisation (RESET) of the microprocessor, to block the selection of a register (4) upon read and write accesses to the said register.

3. Microprocessor according to Claim 1, **characterised in that** the said protection circuit (1) is configured, after each initialisation (RESET) of the microprocessor, to block the selection of a register only upon write accesses to the said register.

4. Microprocessor according to one of Claims 1 to 3, **characterised in that** each protection circuit (1) is connected between an output of the address decoder (2) tasked with selecting the register (3) associated with the said protection circuit and a selection input of the said associated register (3).

5. Microprocessor according to one of Claims 1 to 4, **characterised in that** each protection circuit (1) is configured, during the first N operations of selection of the association register, to compare the N data items present on the data bus with the N passwords specific to the said register, and is unblocked for the subsequent operations of selection of the said register until the next initialisation of the microprocessor if the N data items correspond to the N passwords.

6. Microprocessor according to Claim 4, **characterised in that**, for each register, a password is provided (N = 1), and each protection circuit (1) includes:
- a comparator circuit (CP1) for comparing the data item present on the data bus with the password specific to the said register, upon the first operation of selection of the associated register (3), and for delivering an output signal representative of the result of the comparison,
- first means (B1, B2) for maintaining the said output signal, in the protection circuit, until the next initialisation of the microprocessor,
- second means (RT1, P1) for allowing the selection of the register for the subsequent operations of selection of the said register if the said output signal indicates that the data item present on the data bus of the microprocessor upon the first operation of selection of the register corresponds to the password associated with the said register.

7. Microprocessor according to Claim 6, **characterised in that** the first means include first and second D-type flip-flops (B1, B2) each having a clock input (CK), a signal input (D), an initialisation input (RST) on which is applied a signal for initialisation of the microprocessor, and an output signal (Q), the first flip-flop (B1) having its clock input (CK) connected to the output of the address decoder tasked with selecting the register (3) associated with the said protection circuit (1), and its signal input (D) receiving a signal which corresponds to a logic "1", and the second flip-flop (B2) having its clock input (CK) connected to the signal output (Q) of the first flip-flop (B1), its signal input (D) receiving the output signal from the comparator circuit (CP1), and its signal output (Q) thus delivering the output signal of the comparator circuit until the next initialisation of the microprocessor.

8. Microprocessor according to Claim 7, **characterised in that** the second means include a dual-input AND-type logic gate (P1), the first input of which is connected to the output of the address decoder tasked with selecting the register (3) associated with the said protection circuit (1), the second input of which is connected via a delay circuit (RT1) to the signal output (Q) of the second flip-flop (B2) of the first means, and the output of which is connected to the selection input of the associated register (3).

9. Microprocessor according to Claim 8, **characterised in that** the said delay circuit (RT1) is a shift register synchronised to the operations of selection of the said register (3).

## Patentansprüche

1. Mikroprozessor mit einem Adreßbus, einem Datenbus, mehreren Registern (3) für das Lesen und Schreiben und einem Adreßdecoder (2) zum Auswählen der Register in Abhängigkeit von der Adresse auf dem Adreßbus,
**dadurch gekennzeichnet, daß**
er außerdem mehrere Schutzschaltkreise (1) jeweils zu einem Register (3) des Mikroprozessors zum Sichern des Zugriffs auf das Register umfaßt, wobei die Schutzschaltkreise automatisch die Auswahl der Register nach jeder Initialisierung (RESET) des Mikroprozessors blockieren, und
die Aufhebung der Blockade eines Schutzschaltkreises (1) zu einem Register des Mikroprozessors durch das aufeinanderfolgende Abschicken von N eigenen Kennworten über den Datenbus an das Register bei den N ersten Auswahloperationen dieses Registers mit N ≥ 1 bewirkt wird, wobei die Auswahl des Registers nur für die späteren Auswahloperationen dieses Registers bis zur folgenden Initialisierung des Mikroprozessors effektiv wird.

2. Mikroprozessor nach Anspruch 1, **dadurch gekennzeichnet, daß** der Schutzschaltkreis (1) angesteuert wird, um nach jeder Initialisierung (RESET) des Mikroprozessors die Auswahl eines Registers (4) beim Lese- und Schreibzugriff auf dieses Register zu blockieren.

3. Mikroprozessor nach Anspruch 1, **dadurch gekennzeichnet, daß** der Schutzschaltkreis (1) angesteuert wird, um nach jeder Initialisierung (RESET) des Mikroprozessors die Auswahl eines Registers nur bei Schreibzugriff auf das Register zu blockieren.

4. Mikroprozessor nach einem der Ansprüche 1 bis 3, **dadurch gekennzeichnet, daß** jeder Schutzschaltkreis (1) zwischen einen Ausgang des Adreßdecoders (2) für das Auswählen des zu dem Schutzschaltkreis gehörenden Registers (3) und einen Auswahleingang des dazugehörigen Registers (3) geschaltet ist.

5. Mikroprozessor nach einem der Ansprüche 1 bis 4, **dadurch gekennzeichnet, daß** jeder Schutzschaltkreis (1) angesteuert wird, um bei den N ersten Auswahloperationen des dazugehörigen Registers die N Daten auf dem Datenbus mit den N eigenen Kennworten des Registers zu vergleichen und die Blockade für die späteren Auswahloperationen des Registers bis zur folgenden Initialisierung des Mikroprozessors aufzuheben, wenn die N Daten den N Kennworten entsprechen.

6. Mikroprozessor nach Anspruch 4, **dadurch gekennzeichnet, daß** für jedes Register ein Kennwort (N = 1) vorgesehen ist und jeder Schutzschaltkreis (1) umfaßt:
- einen Vergleichsschaltkreis (CP1) zum Vergleichen der Daten auf dem Datenbus mit dem eigenen Kennwort des Registers bei der ersten Auswahloperation des dazugehörigen Registers (3) und zum Ausgeben eines Ausgangssignals, das das Ergebnis des Vergleichs anzeigt,
- ersten Vorrichtungen (B1, B2) zum Aufrechterhalten des Ausgangssignals in dem Schutzschaltkreis bis zur nachfolgenden Initialisierung des Mikroprozessors,
- zweiten Vorrichtungen (RT1, P1) zum Freigeben der Auswahl des Registers für die späteren Auswahloperationen des Registers, wenn das Ausgangssignal anzeigt, daß der Datenwert auf dem Datenbus des Mikroprozessors bei der ersten Auswahloperation des Registers dem Kennwort für das Register entspricht.

7. Mikroprozessor nach Anspruch 6, **dadurch gekennzeichnet, daß** die ersten Vorrichtungen erste und zweite Kippstufen (B1, B2) vom D-Typ umfassen, die jeweils einen Taktgebereingang (CK), einen Signaleingang (D), einen Initialisierungseingang (RST), an welchen ein Initialisierungssignal des Mikroprozessors angelegt wird, und einen Signalausgang (Q) umfassen,
wobei die erste Kippstufe (B1) über ihren Taktgebereingang (CK) mit dem Ausgang des Adreßdecoders für das Auswählen des zu dem Schutzschaltkreis (1) gehörenden Registers (3) und ihrem Signaleinang (D), an dem ein Signal anliegt, das einer logischen "1" entspricht, verbunden ist,
und die zweite Kippstufe (B2) über ihren Taktgebereingang (CK) mit dem Signalausgang (Q) der ersten Kippstufe (B1), ihrem Signaleingang (D), an dem das Ausgangssignal des Vergleichsschaltkreises (CP1) anliegt, und ihrem Signalausgang (Q), der so das Ausgangssignal des Vergleichsschaltkreises bis zur folgenden Initialisierung des Mikroprozessors ausgibt, verbunden ist.

8. Mikroprozessor nach Anspruch 7, **dadurch gekennzeichnet, daß** die zweiten Vorrichtungen ein Logikgatter (P1) vom UND-Typ mit zwei Eingängen umfaßt, von denen der erste Eingang mit dem Ausgang des Adreßdecoders für das Auswählen des zu dem Schutzschaltkreis (1) gehörenden Registers (3) verbunden ist, der zweite Eingang über einen Verzögerungsschaltkreis (RT1) mit dem Signalausgang (Q) der zweiten Kippstufe (B2) der ersten Vorrichtungen verbunden ist, und dessen Ausgang mit dem Auswahleingang des dazugehörigen Registers (3) verbunden ist.

9. Mikroprozessor nach Anspruch 8, **dadurch gekennzeichnet, daß** der Verzögerungsschaltkreis (RT1) ein Schieberegister ist, das mit den Auswahloperationen des Registers (3) synchronisiert ist.
